# EUROPEAN PATENT APPLICATION

(11) **EP 4 516 385 A1**
(43) Date of publication of application: **05.03.2025**
(21) Application number: 23193830.9
(22) Date of filing: 29.08.2023
(51) Int. Cl.: B01D 63/08, B01D 63/10, B01D 65/08

(54) **A FILTER FOR REDUCING AND PREVENTING BIOFILM FORMATION**

(71) Applicant: EPFF Electrical Pipe For Fluid transport AB, 736 32 Kungsör (SE)
(72) Inventor: ANDERSSON, Thomas, 736 32 KUNGSÖR (SE)
(74) Representative: Brann AB

(57) **Abstract**

A filter unit comprising a housing, or casing, a power source, and a filter element, wherein the housing houses, or encapsulates, the filter element and has at least one inlet arranged to receive a feed, and at least one outlet, arranged to discharge, or release, filtrate, wherein the filter is arranged to form the filtrate from the feed, and wherein the power source is arranged to apply an electric current to the filter element for reducing biofilm formation.

## Description

### Technical field

The technology proposed herein relates generally to filtration of liquid fluid or filters.

### Background

In the production process of dairy products, or in the food industry in general, municipal water or well water is commonly used. Contaminants such as rust and dirt in the water will reduce the service life of components of a food processing system. Accordingly, it is necessary to filter and purify the water used by using filters to improve the service life of systems.

Microbiological growth in filters, such as bacterial growth forming biofilms, is a recognized problem. Such growth can negatively affect the performance of the filters, for example with respect to flow rates and filtration efficiency. Microbiological growth is particularly a problem in dairy, or food, production since such products are high in nutrients favorable for microbiological growth.

Filters used in the processing of such food products typically have high rates of microbiological growth and require frequent cleaning to prevent a drop in quality of the product or rendering the products unfit for use or consumption. Typically, production must be interrupted for cleaning and chemicals are commonly used in cleaning, which contributes to a decreased efficiency and increased production costs. The microbiological growth is particularly a problem in filters that cannot be easily disassembled for manual cleaning. Such filters typically require extensive flushing with anti-microbial chemicals for cleaning.

Accordingly, there is a need to reduce downtime for filter cleaning. In addition, there is a need to reduce the need for chemicals for cleaning filters.

The proposed technology aims at preventing or reducing microbiological growth, such as bacterial growth forming biofilms, in filter membranes and particularly in pores of filter membranes. It is also an object to reduce microbiological growth in filters comprising filter membranes, used in the processing of liquid food products, and specifically in reverse osmosis filters in dairy production.

### Summary

According to a first aspect of the proposed technology, a filter element, or filter media, comprises a first filter membrane that has, or forms, pores arranged to filter a feed, wherein the first filter membrane is electrically conductive.

Feed is understood to refer to the liquid fluid that is to be filtered, or the unfiltered liquid fluid, or the liquid fluid prior to filtration. Filtrate is understood to refer to the filtered liquid fluid, or the liquid fluid after filtration, or post filtration. Worded differently, feed refers to liquid fluid upstream filter elements of a filter, and filtrate refers to liquid fluid downstream filter elements of a filter. In other words, the first filter membrane may be arranged to form a filtrate from the feed.

It is specified that the first filter membrane has pores. It is understood that in a filter membrane, pores allow liquid of the feed to pass through the filter membrane and prevent passage of particles and microorganisms through the filter membrane. For example, pores encompasses openings, or perforations, in the first filter membrane. It is understood that pores extend through the filter membrane and that the pores form a barrier that prevents passage of particles and microorganisms through the pores and the filter membrane.

Microorganisms are here understood to encompass unicellular organisms that may exist in single-celled forms or in colonies of cells, and microscopic multicellular organisms. For example, the microorganisms may be bacteria forming biofilms. It is specified that the first filter membrane is electrically conductive. If a current is applied to the first filter membrane, for example by applying an electric potential over the first filter membrane or the filter element, bacterial growth and biofilm formation is reduced. Thus, the proposed filter element allows for reduced biofilm formation, and in extension blocking of pores is reduced and the resulting pressure increase in the filtrate is reduced. This in turn reduces pumping losses when a higher pressure is needed to maintain filtering capacity.

Wording the first filter membrane being electrically conductive differently, the applied current will prevent biofilm formation on both the feed and the filtrate side of the first filter membrane as well as in the pores. This reduces the risk of filtrate being contaminated by microorganisms releasing from a biofilm formed on the filter membrane feed side. It is understood that biofilm formation is more prevalent on the feed side of the first filter membrane since microorganism and particle buildup is higher on the feed side. Thus, applying current on the feed side of the first filter membrane will also reduce the risk of biofilm formation and growth in the pores and the filtrate side of the first filter membrane.

It is specified above that at least the first filter membrane is electrically conductive. In addition, the complete filter element may be electrically conductive.

The first filter membrane may comprise a first filter material. The first filter material may be electrically conductive. The first filter material may be a single-component material. For example, the first filter material may be an electrically conductive polymer. This is advantageous in that an applied current on the first filter membrane will reduce biofilm formation on the feed side, in and on the pores and the filtrate side of the first filter membrane. It is understood that an electrically conductive polymer encompasses both inorganic or organic polymers and that the polymer as such is electrically conductive. The first filter membrane may be a polymer film.

In another example, the first filter material may be polyethylene, polypropylene, polyamide, or polyester. In this configuration, the first filter membrane may be a fleece or a spun filter.

Alternatively, the first filter material may be a composite material. The first filter material may comprise, or be composed of, an electrically insulating material and an electrically conductive additive. The electrically insulating material may be polypropylene (PP), aromatic polyamide (PA), cellulose acetate (CA) or polyvinylidene fluoride (PVDF). The electrically conductive additive may be carbon or a metal, for example in the form of particles or fibers. Carbon black is a preferred additive in combinations with electrically insulating polymers. In this configuration, the first filter membrane may be a fleece, or a resin bonded filter or a spun filter.

The first filter membrane may be composed of the first filter material, which means that there are no other materials in the first filter membrane. Alternatively, the first filter membrane may be a composite structure comprising the first filter material and a second filter material. It is understood that the two materials are separate, or non-composite. The second filter material may be electrically insulating. In another example, the second filter material may be polypropylene (PP), cellulose acetate, cellulose nitrate (collodion), polyamide (nylon), polycarbonate, polypropylene, and polytetrafluoroethylene (Teflon). In this configuration, the first filter membrane may be a weave of the first filter material and the second filter material.

The filter element may be a mono-membrane filter. Worded differently, the feed is filtered through a single membrane that forms the filtrate. Alternatively, the filter element may comprise a second filter membrane arranged to filter the feed. In other words, the filter element may be a multi-membrane filter element. It is understood that the filter element may have additional filter membranes, for example positioned between the first filter membrane and the second filter membrane.

The first filter membrane and the second filter membrane may be juxtaposed or jointly form a sandwiched structure. Worded differently, the second filter membrane may be aligned with and contact the first filter membrane. The second filter membrane may cover, or contact, the complete first filter membrane. The second filter membrane may be laminated to the first filter membrane. It is understood that the second filter membrane may contribute to form the filtrate. In other words, the second filter membrane may be arranged to form, or at least in part form, the filtrate from the feed.

The second filter membrane may be electrically conductive. This means an applied current will prevent biofilm formation on both the feed and the filtrate side of the second filter membrane The second filter membrane may be of a third filter material. The third filter material may be electrically conductive. The third filter material may have any of the features of first filter material. The third filter material may be of the same material as the first filter material.

The second filter membrane may be composed of the third filter material, which means that there are no other materials in the second filter membrane. Alternatively, the second filter membrane may be a composite structure comprising the third filter material and a fourth filter material. The fourth filter material may have any of the features of second filter material. The fourth filter material may be the same material as the second filter material.

Alternatively to the second filter membrane being electrically conductive, the second filter membrane may be electrically insulating. The third filter material may be electrically insulating. This means that the above-described inhibition of microbiological growth may not be present in the second filter membrane, which may lead to a reduced flow rate of the feed through the second filter membrane.

The second filter membrane may be positioned, or intended to be positioned, upstream of the first filter membrane in relation to the feed. The second filter membrane may have greater pores than the first filter membrane. This contributes to lessen the effect of the microbiological growth on the flow rate. The second filter membrane may have the same pore size as the first filter membrane.

The filter element may further comprise a first backing layer that supports the first filter membrane. It is understood that a backing layer does not form, or lacks, or is devoid of, pores intended for filtering the feed. The first filter membrane and the first backing layer may be juxtaposed or jointly form a sandwiched structure. Worded differently, the first backing layer may be aligned with and contact the first filter membrane. The first backing layer may cover, or contact, the complete first filter membrane. The first filter membrane may be attached to the first backing layer.

In one example, the first filter membrane is a film membrane juxtaposed, or laminated, to the first backing layer to form the sandwiched structure.

The first backing layer may form passages, or channels. The passages, or channels, may be arranged to allow the feed or the filtrate to pass through the first backing layer. For example, the passages may have an averages size that is at least an of order of magnitude greater in size then the average size of the pores of the first filter membrane and/or the second filter membrane. For example, the passages may have a size at least 50-1000 times that of the openings of the first filter membrane.

The first backing layer may be a mesh, web or grid. The first backing layer may be positioned, or intended to be positioned, upstream of the first filter membrane, or the second filter membrane if present, in relation to the feed. The first backing layer may be arranged to form an internal space for holding filtrated particles or microorganisms from the feed. Worded differently, the first backing layer may be a collector layer to collect filtrated particles or microorganisms.

The first backing layer may be electrically conductive. This may prevent bacterial growth and biofilm formation of collected filtrated particles or microorganisms. The first backing layer may be of a backing layer material. The first backing layer may share properties with the first filter material or the second filter material. The backing layer material may be the same as the first material or the second material. The backing layer material may be of the same material as the first filter material or the second filter material.

In one example, the backing layer material may be a single-component material. The backing layer material may be an electrically conductive polymer. The electrically conductive polymer may be an inorganic or organic polymer. In another example, the backing layer material may be polyethylene, polypropylene, polyamide, or polyester.

Alternatively, the backing layer material may be a composite material. The backing layer material may comprise, or be composed of, an electrically insulating material and an electrically conductive additive. The electrically conductive additive may be carbon or a metal, for example in the form of particles or fibers.

When the filter element comprises a backing layer of an electrically conductive backing layer material arranged downstream the first filter membrane, the formation of biofilm on the backing layer and the release of microorganisms into the filtrate is further reduced.

Alternatively to the first backing layer being electrically conductive, the first backing layer may electrically insulating. This means that the above-described inhibition of microbiological growth may not be present in the backing layer material, which may lead to a reduced flow rate of the feed and to the release of microorganisms from the backing layer to the filtrate.

In one example, the backing layer may be made from a metal mesh, or metal grid.

The filter element may be self-supporting, comprising no further layers besides the first filter membrane. This means that the first filter membrane lacks any backing layer or any further membrane(s). In one example, the filter element may be a melt blown or spun filer. A melt blown or spun filter is understood to be formed from polymer fibers that are pressed and sintered, and then melt-blown onto a rotating spindle to create cylindrical filter elements. The resulting structure may thereby be made self-supporting. In one example, the polymer fibers are mixed with electrically conductive additive in the form of carbon or a metal, in the form of particles or fibers, prior to being sintered and melt-blown onto the rotating spindle.

The filter element may further comprise a second backing layer that supports the first filter membrane. If the second filter membrane is present, the second backing layer may also support the second filter membrane. The first filter membrane, or the first filter membrane and the second filter membrane, may be positioned between the first backing layer and the second backing layer.

The first filter membrane, or the second filter membrane if present, and the first backing layer may be juxtaposed. Worded differently, the second backing layer may be aligned with and contact the first filter membrane, or the second filter membrane if present. The second backing layer may cover, or contact, the complete first filter membrane or second filter membrane. The first backing layer may be laminated to the first filter membrane or the second filter membrane. Worded differently, the first filter membrane and the second filter membrane if present, may be laminated to the first backing layer.

The first backing layer, the first filter membrane, and the second backing layer may jointly form, or form part of, a sandwiched structure. If the second filter membrane is present, the first backing layer, the first filter membrane, the second filter membrane and the second backing layer may jointly form, or form part of, a sandwiched structure. It is understood that the membranes and backing layers are arranged in said order in the structures.

The second backing layer may comprise any of the features of the first backing layer. For example, the first backing layer and the second backing layer may be a metal mesh. The second backing layer may be electrically conductive or electrically insulating.

It is specified above, that the filter element may have a first filter membrane and a second filter membrane. If the second filter membrane is present, an intermediate spacer may be arranged between the first filter membrane and the second filter membrane. The intermediate spacer may space the first filter membrane and the second filter membrane apart. The intermediate spacer may form a channel to transport filtrate to a filter element outlet. The intermediate spacer may be electrically conductive. The intermediate spacer may be of an intermediate spacer material. The intermediate spacer material may share properties with the backing layer material, the first filter material or the second filter material. In one example, the intermediate spacer material may be a single-component material. For example, the intermediate spacer material may be an electrically conductive polymer.

Alternatively, the intermediate spacer material may be a composite material. The intermediate spacer material may comprise, or be composed of, an electrically insulating material and an electrically conductive additive. The intermediate spacer material may be made from a first backing material or a second backing material. Alternatively, the intermediate spacer material may be a metal material. The intermediate spacer may be a mesh, or grid, or weave.

The filter element may further comprise a filter support, or frame. The filter support may be attached, or joined, to a first filter membrane, and if present, a further filter membrane, a filter backing layer, and/or an intermediate spacer. Worded differently, the filter membrane, a filter backing layer and/or an intermediate spacer may be attached to the filter support. It is understood that the filter support maintains the filter membrane, and if present, filter backing layers, and intermediate spacer in position during filtration. The filter support may thus prevent the collapse of the first filter membrane, and any further present layers, due to the pressure and flow of the feed. When the filter membrane is a self-supporting filter membrane, the filter element may not have, or lack, a filter support.

The filter support may be a unitary body, or the filter frame may be formed by two or more separate filter frames such as a first filter frame a second filter frame. For example, the first filter frame and the second filter frame may each attach to a filter membrane, a filter backing layer, and/or an intermediate spacer at separate locations. The first filter frame and the second filter frame may attach, or join, to a filter membrane, filter backing layer, and/or intermediate spacer at a first end and a second end of the filter element. The first end and the second end of the filter element may be a longitudinal, or axial, end of the filter element. Alternatively, the first end and the second end may be a first radially inner end and a second radially outer end of the filter element. The filter support may comprise a third filter frame. The third filter frame may join, or connect, to the first filter frame and the second filter frame. For example, the third filter frame may extend longitudinally, between the first and second longitudinal, or axial, first end and second end of the filter element. Alternatively, the third filter frame may extend radially, between the first radially inner end, or first filter frame, and the second radially outer end, or second filter frame.

The filter support may be electrically conductive. The filter support may be of a filter support material. The filter support material may share properties with the first filter material or the second filter material. The filter support material may be the same material as the first filter material or the second filter material. The filter support material may share properties with the first backing material or the second backing material. The filter support material may be of the same material as the first backing material or the second backing material. In one example, the filter support material may be a single-component material. For example, the filter support material may be an electrically conductive polymer. It is understood that an electrically conductive polymer encompasses both inorganic or organic polymers and that the polymer as such is electrically conductive.

Alternatively, the filter support material may be a composite material. The filter support material may comprise, or be composed of, an electrically insulating material and an electrically conductive additive.

In a further alternative, the filter support material may be made of metal, such as stainless steel.

Alternatively to the filter support material being electrically conductive, the filter support material may be electrically insulating. This means that the above-described inhibition of microbiological growth may not be present in the filter support material, which may lead to biofilm formation on the filter support.

The filter element and the at least one first filter membrane may be arranged for dead-end filtration of the feed. Alternatively, the filter element and the least one first filter membrane may be arranged for cross-flow filtration of the feed.

It is understood that in dead-end filtration, the flow of feed is transverse, perpendicular, or vertical, to the filter membrane surface. In dead-end filtration the retained particles may rapidly solidify on the surface of the filter to form a so-called filter cake. Reducing biofilm formation in dead-end filtration thus prevents filter cake build up. It is understood that in dead-end filtration the formation and buildup of a biofilm will lead to particles and microorganisms being caught by the biofilm leading to blockage of the membrane pores resulting in a decrease in filtering efficiency. By reducing biofilm formation and growth, a dead-end filtration filter may operate for longer durations of time before the need for cleaning or replacing the filter.

It is understood that in cross-flow filtration the filter membrane surfaces are arranged tangential, or parallel, to the flow direction of the feed. The feed is thus pushed through the pores of the filter membrane by pressure. By the feed being tangential, or transverse, to the filter membrane surfaces, buildup of filter cake is reduced. However, in cross-flow filtration there is a risk of biofilm buildup that may impede the filter efficiency and service life.

By reducing biofilm formation and growth, a cross-flow filtration filter may operate for longer durations of time before the need for cleaning or replacing the filter.

The filter element may comprise an electrical connection interface that connects, or couples, the filter element to a power supply. This may allow for current to be applied to the filter element. The applied current prevents biofilm formation on at least the filter membrane or membranes of the filter element. The electrical connection interface may be formed by an electrical first connector and an electrical second connector. The electrical first connector and the electrical second connector may be arranged directly on a filter membrane or a backing layer.

The electrical first connector may be coupled, or connected, to ground and the second connector may be coupled, or connected, to positive power of the power source.

In one example, the electrical connection interface is formed by an electrical first connector coupled to positive power, an electrical second connector coupled to positive power, and an electrical third connector coupled to ground. For example, the first filter frame may form the electrical first connector, the second filter frame may form the electrical second connector, and the third frame may form the electrical third connector.

Alternatively, when the filter element comprises a filter support, the electrical connection interface may be formed by the filter support. In one example, the first connector and the second connector may be arranged on the filter support. This has the effect to, in addition to the filter membrane, reduce biofilm formation and growth on the filter support as well as the first filter membrane. When the filter support comprises the electrical connection interface, the filter membrane may be electrically coupled, or connected, to the electrical connection interface of the filter support. For example, both the filter support and filter membrane may be conductive, and joined by an electrically conductive joint, such as by conductive adhesive, and an applied current may flow through both the filter support and the filter membrane.

The first connector and the second connector may be positioned, or located, at opposite sides of the filter element. For example, the first connector and the second connector may be positioned, or located, at opposite sides of the first filter membrane. The first connector may be arranged on a first filter frame and the second connector may be arranged on the second filter frame. This contributes to distribute the applied current over the first filter membrane. For example, the filter membrane may be a disc filter and the first connector may be arranged at, or about, a radial center of the disc, and the second connector may be arranged at, or about, a radial outer border of the disc. In a further example, the filter membrane may be an axial filter, having a longitudinal extension along a filter axis, and the first connector may be arranged at, or about, a first axial end of the filter membrane and the second connector may be arranged at, or about, a second axial end of the filter membrane.

It is specified above that the filter support material may be a composite material. It is understood that portions of the filter may be electrically conductive. It is understood that the portions of the filter support that are not electrically conductive, may be electrically insulating. For example, during moulding, or forming, of the filter support, electrically conductive additive may be added to portions of the structure forming the filter support.

The current may flow in the filter membrane transverse relative to the feed. For example, the element may be a disc filter arranged transverse to the feed, arranged for dead-end filtration. The current may flow in the filter membrane transverse to the feed. The current may flow parallel relative to the feed. For example, the filter element may be an axial filter, or a cross-flow filter, and the current may flow in the filter membrane of the filter in a direction parallel to the feed.

It is specified above that the filter element may have a first filter membrane and a second filter membrane. Each filter membrane may be individually coupled, or connected, to the power source, by a respective electrical connection interface. The first filter membrane may be coupled, or connected, to a first electrical connection interface. The second filter membrane may be coupled, or connected, to a second electrical connection interface. This allows the power source to control the currents applied to the first filter membrane and the second filter membrane. For example, the second filter membrane may be arranged upstream the first filter membrane and thus more susceptible to biofilm formation and growth. The power source may apply a different and/or higher current to the first filter membrane to counter this effect.

Alternatively, the first filter membrane and the second filter membrane may share an electrical connection interface. For example, the first filter membrane and the second filter membrane may be joined to a filter support, and the filter support may comprise the connection interface. The first filter membrane and the second filter membrane may be coupled, or connected, to the power source in parallel. The current applied over a membrane may thus depend on the overall resistance of a filter membrane. The first filter membrane and the second filter membrane may be coupled, or connected, to the power source in series. This allows the current applied to both the first filter membrane and the second filter membrane to be controlled by the power source.

The first connector and the second connector may each form part of a snap connector, or snap mount. For example, the first connector may be formed by a male or female connector, arranged on the filter membrane or the filter support, arranged to connect to a female or male connector arranged on a filter housing or filter element support. A snap connector is understood as a connector for which a pushing force must be overcome for mating the first connector part to a matching connector and a pulling force must be overcome for detaching the first connector from the matching connector part.

Alternatively, the first and second connector may each form part of a bayonet connector, or bayonet mount. The first connector and the second connector may be metal connectors laminated, or attached, to the support frame or the filter membrane. For example, the first connector and the second connector may form part of the fixings for fixating the filter membrane to a filter unit housing.

The first connector and the second connector may be fixed, or non-detachable, connectors. For example, the first connector and the second connector may be formed by a lead, or electric cable, soldered, or fixedly attached to the filter membrane or filter support. first cable, or lead.

The filter element may outline a cylinder or a cylindrical tube. The filter element may outline a cube, or cuboid. The filter element may outline a prism, such as a hexagonal prism. The filter element may outline a cone. The filter element may outline a circular disc or a square disk. The filter element may be rotational symmetric around a central axis. The filter element may be non-rotational symmetric around a central axis. In one example, the filter element is a cylindrical filter cartridge. In an alternative example, the filter element is a disc filter.

It is specified above that a first filter membrane has, or forms, pores arranged to filter a feed. The filter membrane may comprise pores of a size adapted, or arranged, to filter out particles or micro- or bio-organisms of a predetermined size.

The filter membrane may be a particle filter membrane, that has a pore size or diameter of the pores, or perforations, in the range of 0.01 mm to 1 mm.

The filter membrane may be a microfiltration membrane, that has a pore size or diameter of the pores, or perforations, in the range of 0.1 um to 10 um.

The filter membrane may be an ultrafiltration membrane, that has a pore size or diameter of the pores, or perforations, in the range of 0.02 um to 0.09 um, or in the range of 0.02 um to 0.05 um.

The filter membrane may be a nanofiltration membrane, that has a pore size or diameter of the pores, or perforations, in the range of 1 nm, or 0.001 µm, to 10 nm, or 0.01 um.

The filter membrane may be a reverse osmosis membrane, that has a pore size or diameter of the pores, or perforations, in the range of 0.0001 um to 0.001 um.

With decreasing pore size, the risk of blockage due to biofilm formation and growth may be increased. Thus, reducing biofilm formation and growth is particularly beneficial with pore sizes below 0.01 um as blockage of pores with a decrease in flow rate of the filter is prevented. This reduces pumping losses and improves filtering efficiency. The electric current applied to the filter membranes may be low compared to the increased electric current needed to overcome pumping losses.

The current applied to the filter membranes may be adjusted depending on pore size. For example, a lower current may be applied when the pore size corresponds to particle filtration microfiltration relative to nanofiltration or reverse osmosis filtration.

It is specified above that the filter element may have an electrical connection interface for applying an electrical current to the at least the first filter membrane, and that the electrical connection interface may be formed by a first connector and a second connector. The electrical connection interface may couple, or connect, to the power source. The power source may be configured, or arranged, to supply an electric current or electric potential for reducing, inhibiting, or preventing growth of microorganisms in at least the first filter membrane.

The power source may convert electric power of a first type, or form, to an output electric power.

The electric current may be an alternating current. The alternating current may have a square wave form. This means that the peak voltage is approximately equal to the root-mean square voltage. It has been found that this type of current inhibits microbiological growth. The alternating current may be below 10 mA, below 1 mA, between 0.1 mA and 1 mA, or between 0.3 mA and 0.7 mA. It has been found that this current is sufficient for inhibiting microbiological growth. The alternating current may have a frequency below 100 Hz, below 10 Hz, or below 1 Hz. The alternating current may be supplied at a peak voltage below 120 V, in the range 40 V to 100 V, or in the range 70 to 90 V. Additionally or alternatively, the alternating current may have a duty cycle of about 50 %.

In one example, the power source may be arranged, or configured, to output an electrical alternating current having a frequency in the range of 1-100 Hz, a voltage in the range of 40-120 V, and a duty cycle of about 50%.

The power source may be a transformer that transforms a mains power to the above output voltage and current. Alternatively, the power source may be an inverter that converts a DC power, such as provided by a battery, to the above specified output voltage and current and frequency.

The output of the power source may be adjusted based on input from a sensor such as a microorganism detecting sensor arranged downstream a filter element.

The filter element may be arranged, or housed, or encapsulated, in a filter housing, or filter casing.

The housing may match the shape, or dimensions, of a filter element to allow the housing to hold a filter element. The housing may form, or define, a cylinder. The housing may be rotation symmetric around a cylinder axis. The housing may have a first end wall, or first base, and a second end wall, or second base. The first end wall and/or the second end wall may be convex, or half-spherical. The first end wall and/or the second end wall may be transverse to the body cylinder mantle surface.

The housing may have at least one inlet and at least one outlet. The inlet may be arranged to receive the feed, or liquid to be filtered. The inlet may be connected to a pipe or other fluid transport means, such as a hose, or other source of feed. The outlet may be connected to a pipe or other fluid transport means, such as a hose, and provide filtrate. Worded differently, the feed may enter the inlet, be filtered by the filter element(s) to form filtrate and subsequently may be discharged from the housing from the outlet.

The outlet may be arranged in downstream fluid communication with, or downstream, the inlet. This means that the liquid fluid flows from the inlet to the outlet. It is understood that the outlet may be arranged downstream the inlet. This means that the outlet is arranged after the inlet relative to the flow direction of the feed, or liquid fluid. It is understood that the inlet may be arranged upstream the outlet. This means that the inlet is arranged before the outlet relative to the flow direction of feed, or liquid fluid.

The housing may hold at least one filter element. Alternatively, the housing may hold a plurality of filter elements. Each filter element may be identical and share the same mechanical or structural properties as the other filter elements. This means that the plurality of filter elements may have filter membranes with pores of a matching, or identical size or diameter.

Alternatively, each filter element may be different from other filter elements, in relation to mechanical or structural properties. For example, a second filter element may be arranged upstream a first filter element. The first filter membrane of the first filter element may have pores of a smaller size, or diameter, compared to a first filter membrane of the second filter element. The current applied to the first filter element and the second filter element may then be tuned depending on biofilm formation and growth.

The housing may further hold filter elements that do not, or lacks, electrically conductive filter membranes.

It is understood that the housing may be made of an electrically conductive material. The housing may be made of a housing material. In one example, the housing may be made from metal, such as stainless steel. The housing material may be an electrically conductive polymer. Alternatively, the housing material may be a composite material. For example, the housing may be carbon fiber comprising carbon fibers and a resin. The first filter material may comprise, or be composed of, an electrically insulating material and an electrically conductive additive. Alternatively, the first housing material may be a composite structure comprising the housing material and an electrically conductive coating material applied on the housing material. It is understood that the two materials are separate, or non-composite. In one example, the housing material may be a fiber composite material that has been coated on a housing internal surface with an electrically conductive material, such as a polymer.

It is further understood that the housing may be arranged with an electrical third connector and an electrical fourth connector, arranged to be coupled, or connected, to the power source. This has the effect that biofilm formation, or growth, on the housing internal walls, or surfaces, may be prevented and reduced.

It is specified above that the housing may hold one or a plurality of filter elements. The filter element may be a disc shaped filter element, or disc filter. The disc filter may have a diameter that matches, or conforms, to the inner diameter of a filter housing. The disc filter may be arranged for dead-end filtration. The discs are thus arranged transverse to the housing geometrical axis. The disc filters may seal against the housing and form a liquid fluid seal against the inner surface of the housing. A plurality of disc filters may be arranged in the housing in a stacked formation to form a multi filter element filter unit. The housing may house at least three disc filters, at least five disc filters, at least ten disc filters such as between ten and fifteen disc filters.

The disc filters may be arranged, or mounted, to a central support beam, or axial fixing rod. The support beam may be aligned with the housing central axis, or longitudinally extending axis. The support beam may be supported at a first end and/or a second end of the housing. The central support beam may be connected to the first end wall and/or second end wall of the housing. The support may be electrically insulated from the housing. The disc filters may comprise a central opening matching the diameter or shape of the support beam. The disc filters may be arranged to slide onto, and along, the support beam and be fixated to the support beam. A first disc filter may be arranged at an axial distance, along the support beam, from a second disc filter by a sleeve, or a shim. The stack of a plurality of disc filters may comprises at least one sleeve, or shim, arranged between two adjacent disc filters. The central opening in a disc filter received, or placed onto, the support beam may be matched with the support beam to form a fluid tight fit and seal. This means that fluid may be prevented from flowing between the support beam and the central opening of a disc filter, and that liquid fluid is forced to flow through the plurality of pores of the filter membranes. The support beam may be made from metal, or other electrically conductive material. In one example, the support beam may be made from stainless steel. Alternatively, the support beam may be nonconductive and comprises a conductive lead arranged on or inside the support beam, arranged to be connected, or coupled to disc filters.

It is specified above that the housing may be made from an electrically conductive material such as stainless steel. The central support beam may form a first part of the electrical first connection interface between a disc filter and the central support beam. The housing may form a second part of the electrical first connection interface between a disc filter and the housing. This means that a voltage potential may be formed between the housing and the support beam, and an electric current is generated through the disc filters when a voltage potential between the housing and support beam is applied. This may reduce and prevent buildup of a biofilm on the disc filters.

It is understood that the filter element may be a spiral wound filter element, or spiral filter. The spiral filter may comprise at least one membrane, wound around a permeate spacer or permeate pipe. The permeate pipe may be in fluid feed connection with the inlet and may distribute the fluid received at the inlet to the membrane or membranes. The fluid may flow from the openings in the permeate pipe, radially outwards and be filtered by the membrane or membranes, to form filtrate. The filtrate may exit the spiral filter at the outermost surface, or radially outer surface, of the spiral filter. Alternatively, the filtrate may be collected in at least one intermediate spacer layer and exit the spiral filter at an axial end of the filter. The permeate pipe may be open at an axial first end and closed at an axial second, opposite, end. The permeate pipe may form, or form part of, the filter support. The permeate pipe may be made from an electrically conductive material sharing properties of the filter support material disclosed above. The permeate pipe may be made of the same material as the filter support. The permeate pipe may be metal such as stainless steel.

The permeate pipe may form part of the electrical connection interface of a spiral filter that is connected, or coupled, to a power supply.

The housing may house a plurality of spiral filters, arranged in parallel with the housing central axis and spaced apart at a radius from the housing axis. The housing may then comprise a wall divider, that divides the housing into an inlet space, or inlet manifold, and an outlet space, or outlet manifold. The wall divider may comprise a plurality of openings matching the outer circumference of the plurality of spiral filters. The wall divider may form the first connector, and may couple, or connect, to the longitudinal end first filter frame of the spiral filter. It is understood that the wall divider may form a first support to support the plurality of spiral filters at a first axial end of the spiral filters. The housing may be arranged comprising a second support for supporting the opposite second axial end of the spiral filters.

According to a second aspect, a filter unit is provided, the filter unit comprising a filter element, a housing or casing, a power source, wherein the filter element is a filter element as specified above. The housing houses, or encapsulates, the filter element and has at least one inlet arranged to receive a feed, and at least one outlet, arranged to discharge, or release, filtrate, wherein the filter is arranged to form the filtrate from the feed, and wherein the power source is arranged to apply an electric current to the filter element for reducing biofilm formation.

In a third aspect, a method for filtering a liquid fluid using the filter assembly is provided, the method comprising:
- flowing a liquid fluid through filter membrane as specified above, while
- applying a voltage potential over the filter membrane to generate an electrical current flow in the filter membrane,

Wherein the voltage is an alternating current having a frequency in the range of 1-100 Hz, a voltage in the range of 40-120 V, and a duty cycle of about 50%.

### Brief description of the drawings

A more complete understanding of the abovementioned and other features and advantages of the technology proposed herein will be apparent from the following detailed description of preferred embodiments in conjunction with the appended drawings, wherein:
Fig. 1A shows a filter comprising a plurality of disc filters;
Fig. 1B shows a plane view of a disc filter;
Fig. 1C shows a plane view of an alternative disc filter;
Fig. 1D shows an enlarged view of the structure of the filter element of Fig. 1B
Fig. 2A shows a filter comprising a single spiral wound filter;
Fig. 2B shows a cross sectional plane view along A-A of the spiral filter of Fig. 2A.
Fig. 2C a multi-layered membrane structure of the filter of Fig. 2A and 2B;
Fig. 2D shows an alternative membrane structure of the filter of Fig. 2A-2C;
Figs. 3A shows a filter with a spiral wound multi-layered membrane reverse osmosis filter element;
Fig. 3B shows a multi-layered membrane structure of the filter of Fig. 3A;
Fig. 4A shows a filter comprising a plurality of spiral filters housed in a filter housing;
Fig. 4B shows a first cross sectional view along B-B of the filter assembly of Fig. 4A.

### Detailed description of the drawings

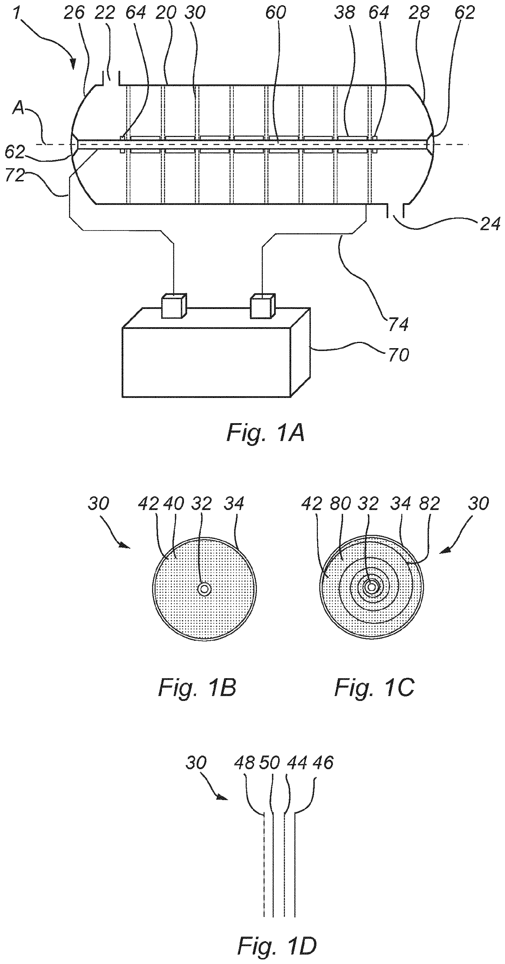

Fig. 1A shows a filter unit 1 comprising a power source 70 and a housing 20 that houses filter elements 30. The filter 1 is shown housing, or encapsulating, a plurality of filter elements 30 in the form of disc filters 30. The housing 20 is shown having an inlet 22 and an outlet 24. The inlet 22 is connected and arranged to receive a source of feed, or liquid fluid to be filtered. The outlet 24 is connected to provide, or arranged to discharge, a filtrate, or filtered liquid fluid, from the housing 20. The filter unit 1 is arranged to filter feed that flows from the inlet 22, through the disc filters 30, wherein the disc filters 30 form the filtrate from the feed. The filtrate is discharged from the filter housing 20 via the outlet 24. The inlet 22 is arranged upstream the disc filters 30 and the outlet 24. The outlet 24 is arranged downstream the inlet 22 and the disc filters 30. The inlet 22 is shown as a radial, or transverse to a central housing axis A, inlet 22. The outlet 24 is shown as a radial, or transverse to the housing axis A, outlet 24.

The disc filters 30 are disc shaped and has a central opening arranged, or adapted, to be secured to an axial fixing rod 60. The fixing rod 60 is shown aligned and coaxial to the housing axis A. The disc filters 30 are shown having a central first frame 32 that matches the diameter of the fixing rod 60 (see Fig. 1B). This allows the disc filters to be slid, or axially moved, onto the fixing rod 60, or the first frame 32 to be received on the fixing rod 60. The first frame 32 thereby defines an opening to receive the fixing rod 60. The first frame 32 seals against the fixing rod 60, to prevent flow of feed, or liquid fluid, from bypassing the disc filters 30. In addition, the disc filters 30 have a second filter frame 34 (See Fig. 1B) arranged at a radially outer edge 36, or border 36, of the disc filter 30. The second filter frame 34 is thus arranged at a radial outer from the first filter frame 32. The second frame 34 matches the inner diameter, and cross-sectional shape, of the housing 20. The second filter frame 34 seals against the housing 20 and prevents feed, or liquid fluid, from bypassing the disc filters 30. The feed is thereby forced to pass through the pores of the filter membranes 40 of the plurality of disc filters 30.

Between disc filters 30, a spacer 38, or sleeve 38, is arranged on the fixing rod 60. The spacers 38 separate and maintains a disc filter 30 at a predetermined distance from an adjoining disc filter 30, or a further disc filter 30 that a disc filter 30 faces. The spacer 38 is slid, or axially moved, onto the fixing rod 60 and engages an axial surface of the disc filter 30. Thereby a stack, or row, of disc filters 30 is formed and fixed on the fixing rod 60. In addition, a first and a second end clamp 64, or end stop 64, are fixed on the fixing rod 60 arranged to clamp, and hold the stack, or row, of disc filters 30, together. The stack of disc filters thus forms part of a multi disc filter, filter unit 1. The fixing rod is shown supported at the housing axial ends by two axial rod fixings 62. The fixing rod 60 is electrically insulated from the housing 20. The rod fixings 62 are nonconductive and insulates the fixing rod 60 in relation to the housing 20. The fixing rod 60 is connected, or coupled, to the power source 70 by an electrical first cable 72, or first lead 72. In addition, the power source 70 is coupled, or connected, to the housing by an electrical second cable 74, or second lead 74. The housing 20 shown is electrically conductive and couples, or connects, to the second frame 34 of the plurality of disc filters by the housing inner mantle surface. The second frame 34 is electrically conductive and couples, or connects, to the filter membrane 40 of a respective disc filter 30. The first frame 32 of the plurality of disc filters 30 is electrically coupled, or connected, to the fixing rod 60. The fixing rod 60 is electrically conductive. The first frame 32 is electrically conductive. The first frame 32 of the plurality of disc filters 30 forms the first part of the electrical connection interface. The second frame 34 of the plurality of disc filters forms the second part of the electrical connection interface. When the power source applies a current and voltage to the first cable 72, and the second cable 74, a current is generated, and flows, through the filter membranes of the plurality of disc filters that reduces, prevents, or inhibits biofilm formation on the filter membranes. In addition, the current reduces, prevents, or inhibits biofilm formation on the filter frames 32, 34. A current will flow from the power source 70, through the first cable 72, to the fixing rod 60. From the fixing rod 60 the current will be divided into a plurality of parallel currents that flow through each of the first filter frames 32, through the filter membranes 40 to the second filter frames 34 of the plurality of disc filters 30. From the second filter frames 34 of the plurality of disc filters 40, the current will flow into the housing 20 and to the second cable 74 and back to the power source 70. When the polarity of the applied voltage potential provided by the power source 70 is altered, the current will flow in the opposite direction in relation to what is described above.

Fig. 1B shows an axial view, of one disc filter 30 of the filter 1 shown in Fig. 1A. The disc filter 30 outlines a disc. The disc filter 30 is shown having a plurality of pores 42 distributed over the filter membrane 40. Arranged centrally at a central geometric axis of the filter membrane 40, is the first filter frame 32. Arranged radially outwards from the central geometric axis, along the border, or edge, of the filter membrane 40, the second filter frame 34 is arranged. The filter frames 32, 34 are shown manufactured by the same material as the filter membrane, and the filter frames 32, 34 are joined together with the membrane 40 to form an electrical connection between the frames 32, 34 and the filter membrane 40.

Fig. 1C shows an alternative disc filter 30. The membrane 40 is shown divided by an electrically insulated continuous and gradually widening spiral border 82 that extends from the first frame 32 to the second frame 34. The membrane is thus formed from a membrane strip 80 that is continuous and gradually widening spiral strip 80 that joins the first frame 32 at a first end and joins the second frame 34 at a second end. Since the border 82 is electrically insulated, when a voltage potential is applied between the first frame 32 and the second frame 34, the current will flow in and along the spiral membrane strip 80 from the first end to the second end.

Fig. 1D shows the membrane layer structure of the disc filter of Fig. 1B. The first filter membrane 44 is juxtaposed, or sandwiched, to a first backing layer 46. The second filter membrane 48 is juxtaposed, or sandwiched, to a second backing layer 50. The second backing layer 50 is in turn juxtaposed, or sandwiched, to the first filter membrane 44. The feed will first be filtered by the second filter membrane 48, and subsequently by the first filter membrane 44. As shown in Fig. 1D, the pores 42 of the second filter membrane 48 is a magnitude larger than the pores 42 of the first filter membrane 44. The filter element of Fig. 1D is a multi-membrane laminated layer filter element.

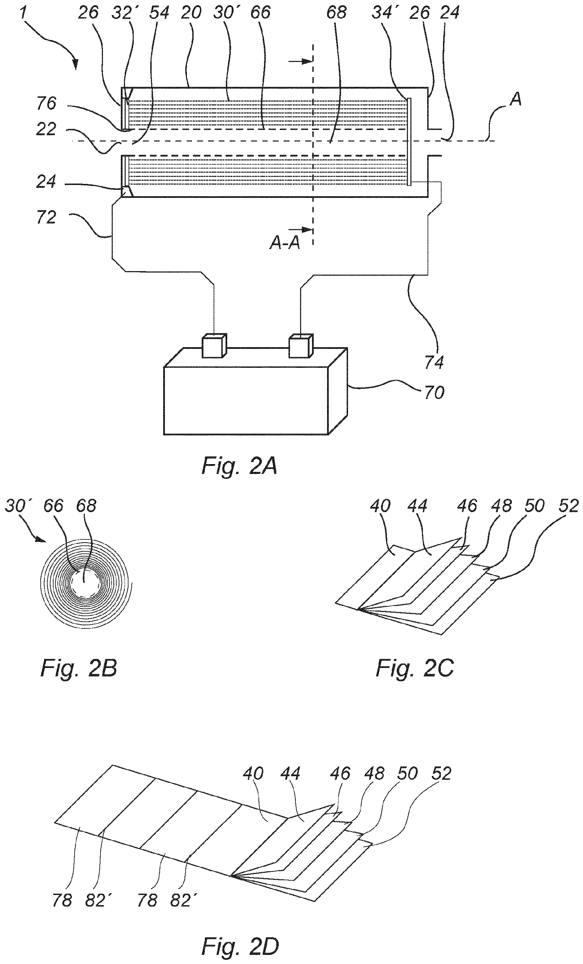

Fig. 2A shows a housing 20, that houses, or encapsulates a filter element 30' in the form of a spiral wound axial filter 30', or spiral filter 30'. The housing 20 is a cylindrical housing 20 and has a first end 26 and an axially opposite second end 28 and a mantle surface connecting the first end 26 to the second end 28. The first end 26 is defined by a first end wall 26. The second end 28 is defined by a second end wall 28. The first end wall 26 has an axial opening 22, aligned and arranged centrally around the central geometric axis A of the housing 20. The axial opening 22 forms the inlet 22 of the housing 20. The second end wall 28 comprises a further axial opening 24, arranged centrally around the central geometric axis A of the housing 20. The further axial opening 24 forms the outlet 24 of the housing 20. The inlet 22 and the outlet 24 are axial openings arranged parallel to the geometric axis of the housing 20. In addition, the inlet 22 and outlet 24 are shown being coaxial to the geometric axis A of the housing 20. The spiral filter 30' has a first end facing towards the first end wall 26 of the housing 20. The spiral filter 30' has a second end facing towards the second end wall 28 of the housing 20. The first end of the spiral filter 30' is formed by the spiral filter first frame 32'. The second end of the spiral filter is formed by the second frame 34' of the spiral filter 30'. The first frame 32' has a filter inlet 54, or opening, matching, or conforming to, the diameter of the housing inlet 22. The second frame 34' forms a filter end. A filter inlet 54 seals against the housing inlet 22 by a sleeve 76. Feed entering the housing inlet 22 is thereby guided to the filter inlet 54 and is prevented from flowing, or escaping, past the filter 30'. The filter inlet 54 and the first frame 32' is positioned, or arranged, onto, or around a sleeve 76. The filter 30' is shown comprising a permeate tube 66, or pipe 66. The membrane 40 is wound around the permeate pipe 66. The permeate tube 66 is a rigid tube that supports the spiral wound filter 30'. The permeate tube 66 comprises radial openings that distribute the feed to the filter membrane 40 to improve filtration efficiency. The permeate tube 66 is connected to the first frame 32' and the second frame 34'. The second frame 34' blocks the end of the permeate tube 66.

Fig. 2B shows a cross-sectional view along A-A of the spiral filter shown in Fig. 2A having a membrane 40 wound around the permeate tube 66. The membrane 40 of the spiral filter 30' is a multi- membrane filter 40 and is shown in Fig. 2C. The multi-membrane filter 40 is formed by a plurality of layers sandwiched together to form the multi-layered filter membrane 40. A first membrane layer 44 is joined at a first surface to a first surface of a first backing layer 46 facing the first surface of the first membrane layer 44. The first membrane layer 44 is electrically conductive. The first backing layer 46 is electrically conductive. The first backing layer 46 is on an opposite surface, relative to the surface facing the first membrane layer 44 joined to a second membrane layer 48. The first backing layer 46 is thus sandwiched between, and joined to both, the first membrane layer 44 and the second membrane layer 48. The second membrane layer 48 is electrically conductive. The second membrane layer 48 is further joined to a second backing layer 50. The second backing layer 50 is arranged on an opposite surface of the first backing layer 46. Thus, the second membrane layer 48 is sandwiched between the first backing layer 46 and the second backing layer 50. The second backing layer 50 is electrically conductive. Fig. 2C further shows a third membrane layer 52 joined to the second backing layer 50. The third membrane layer 52 is arranged on an opposite surface relative to the second membrane layer 48. The third membrane layer 52 is electrically conductive. In order the membrane layers are arranged: first membrane layer 44, first backing layer 46, second membrane layer 48, second backing layer 50 and third membrane layer 52 that together form the multi-layered membrane 40.

Fig. 2D shows an alternative multi-membrane filter to the filter of Fig. 2C. The filter membrane of Fig. 2D differs by comprising a plurality of electrically insulated axial borders 82' that extend in parallel from the first frame 32' to the second frame 34'. The borders divide the filter membrane into sub-membranes 78 that are electrically insulated from each other. This means that the current in the sub-membranes 78 flows from the first frame 32' to the second frame 34' in a sub-membrane 78 and is prevented from transitioning to a neighboring, or adjacent sub-membrane 78.

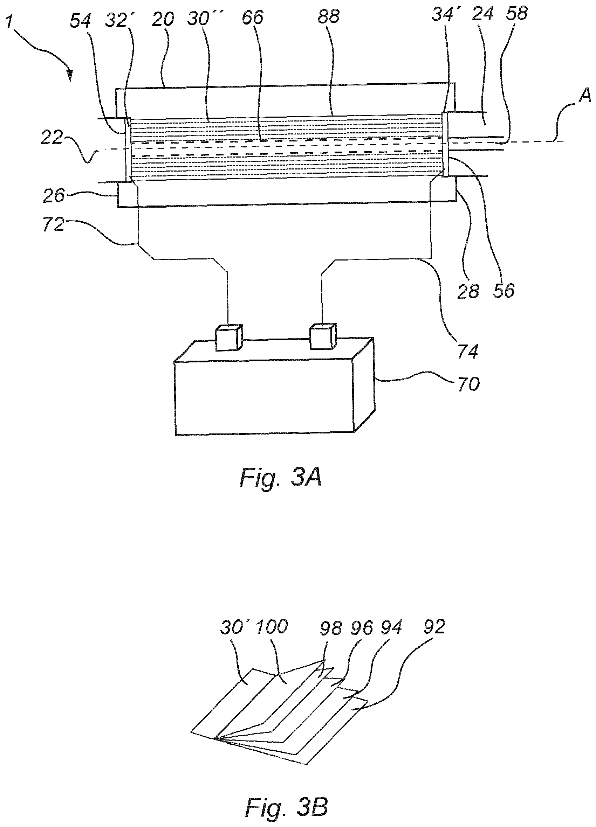

Fig. 3A shows an alternative filter comprising a filter housing 20 and a filter element 30" housed, or encapsulated, in the housing 20. The housing 20 has the outline of a cylinder. The housing 20 comprises an inlet 22, in the form of an axial inlet 22 arranged in a first end wall 26 of the housing 20. The housing 20 further comprises an axial outlet 24, arranged on an opposite, second end wall 28 of the housing 20. The filter element 30" is in the form of a reverse osmosis filter 30". The filter 30" is a multi-layered membrane filter comprising a plurality of filter membranes sandwiched together to form the filter 30". The filter element 30" comprises an axial permeate outlet 58 coupled to, or forming part of, a permeate tube 66. A filter inlet 32', a first outlet 34' and the permeate outlet 58 are axial outlets, parallel and aligned with a central axis A of the housing 20. The filter element 30" is arranged downstream the housing inlet 22, and upstream the housing outlet 24. Feed enters the inlet 22 and flow into the filter inlet 54 and flows from the filter inlet 54 to the filter outlet 56 through channels in the filter. The pressure difference between the filter channels and the permeate tube 66 results in that small particles pass through the membrane layers to reach the permeate tube 66 as filtrate. The filtrate is discharged from the permeate outlet 58. The permeate outlet 58 and the feed outlet 56 are separate. Fig. 3A further shows that the filter membrane comprises an outer wrap 90 that is impermeable to the feed, such as liquid fluid. The outer wrap 90 seals the filter and prevents feed from passing past the filter element 30".

Fig. 3B shows the filter membrane of the filter of Fig. 3A, wherein the filter membrane 30" is formed by a plurality of sandwiched layers. A first feed channel spacer 92 is arranged and layered onto an outer wrap (not shown). The feed channel spacer may also be a first backing layer. The first feed channel spacer 92 allows feed to flow from the filter inlet to the filter outlet. The feed channel spacer 92 provides structural strength to the filter element and prevents filter element collapse. Arranged and layered on the first feed channel spacer 92 is a first membrane layer 94. Arranged and layered on the first membrane layer 94 is a permeate collection layer 96, or intermediate spacer 96. Arranged and layered on the permeate collection layer 96 is a second membrane layer 98. The permeate collection layer 96 is thus sandwiched between the first membrane layer 94 and the second membrane layer 98. Arranged and layered on the second membrane layer 98 is a second feed channel spacer 100, or second backing layer 100. The filter membrane is wound around the permeate tube 66. Feed enters the first feed channel spacer 92 and the second feed channel spacer 100 and is filtered by the first membrane layer 94 and the second membrane layer 98 and the filtrate is collected by the permeate collection layer 96 and flow to the permeate tube 66. From the permeate tube 66 the filtrate transported to and discharged from the permeate outlet 58. The unfiltered feed is discharged from the spiral filter by the filter outlet 56.

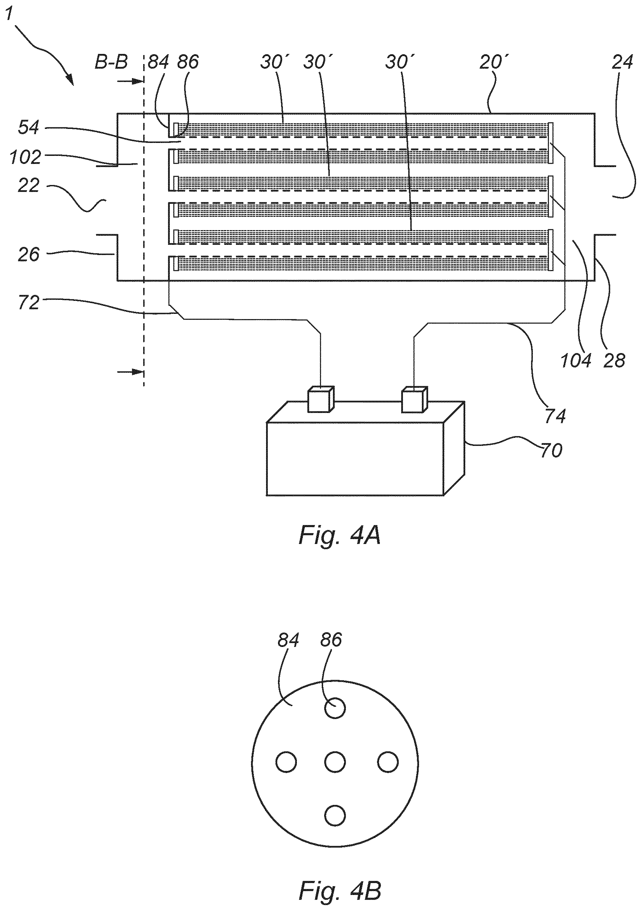

Fig. 4A shows a filter 1 comprising a housing 20' that houses a plurality of axial filters 30'. The housing 20' is shown having a central axial inlet 22 arranged in a first side wall 26 of the filter housing 20'. In addition, the housing comprises an axial outlet 24 arranged in the second end wall 28 of the filter housing 20'. The second end wall 28 is arranged on an opposite side of the housing 20' from the first end wall 26. In addition, the housing 20' has a divider 84, or dividing wall 84, dividing the housing 20' into an inlet section 102, or inlet manifold 102, and an outlet section 104, or outlet manifold 104. The divider 84 has a plurality of divider sleeves 86 arranged around the central axis of the housing 20. The plurality of sleeves 86 are each in fluid communication with the housing inlet 22 and with a filter inlet 54 of a respective filter 30'. The feed, after entering the housing inlet 22, is collected in the inlet section 102 and divided into a plurality of feeds by the divider wall 84. Each divided feed subsequently flows through a sleeve 86 and enters a respective filter element 30' inlet 54. The divided feeds are filtered through the filter elements 30' and forms filtrate. Downstream the filters 30' the filtrate is collected in the outlet section 104, or outlet manifold 104, and is provided to the housing outlet 24, wherein the filtrate is discharged from the filter housing 20 and filter 1. The filter elements are axial multi-layered filter elements 30', sharing structure with the axial filter disclosed in relation to Fig. 2A. The power source 70 is coupled, or connected, to the divider wall 84 by a first cable 72, or lead 72. The divider wall 84 is electrically conductive and in electrical contact with the first filter frame of the plurality of filter elements 30'. The second filter frame of the plurality of filter elements 30' is coupled, or connected, to the power source 70 by a second cable 74, or lead.

Fig. 4B shows a cross-sectional view along B-B showing the divider wall 84 and the plurality of sleeves 86 arranged around the central axis of the housing 20'. Each sleeve 86 is in fluid connection with the filter inlet 54 of a respective filter element 30'.

### Item list

1 filter unit
20 housing
22 inlet
24 outlet
26 housing first end
28 housing second end
30 disc filter element
30' spiral filter element
30" reverse osmosis filter
32, 32' first filter frame
34, 34' second filter frame
36 outer edge, or border
38 spacer, or sleeve
40 filter membrane
42 pores
44 first filter membrane
46 first backing layer
48 second filter membrane
50 second backing layer
52 third membrane layer
54 filter element inlet
56 filter element outlet
58 filter element permeate outlet
60 fixing rod, support beam
62 rod fixings
64 end clamps, end stop
66 permeate tube
68 feed channel
70 power source
72 first cable, or lead
74 second cable, or lead
76 sleeve
78 sub-membrane
80 spiral membrane
82 spiral border
84 divider
86 divider sleeve
88 wrap
90 multi-layered reverse osmosis membrane
92 feed channel spacer, first backing layer
94 first filter membrane
96 permeate collection layer, intermediate spacer
98 second filter membrane
100 feed channel spacer, second backing layer
102 inlet manifold
104 outlet manifold

## Claims

1. A filter element, or filter media, comprising a first filter membrane that has, or forms, pores arranged to filter a feed, wherein the first filter membrane is electrically conductive.

2. The filter element of claim 1, wherein the filter element comprises an electrical connection interface arranged to connect, or couple, the filter element to a power supply.

3. The filter element of claim 1-2, wherein the filter membrane is a mono-membrane filter.

4. The filter element of claim 1-2, wherein the membrane is a multi-membrane filter element comprising the first membrane and a second filter membrane, sandwiched together to form the multi-layered filter membrane.

5. The filter element of any of claims 1-4, wherein the filter element comprises a first backing layer that is juxtaposed, or jointly forms, a sandwiched structure together with the first filter membrane.

6. The filter element of claim 5, wherein the first backing layer is electrically conductive.

7. The filter membrane of claim 1-6, wherein the filter element comprises a filter support, or frame, attached, or joined, to the first filter membrane and/or first backing layer.

8. The filter element of any of claims 7, wherein the filter support is formed by a first filter frame and a second filter frame that forms the electrical connection interface.

9. The filter element of claims 8, wherein the filter element is a spiral wound filter element, or spiral filter, comprising the first filter frame arranged at a first axial end of the filter element and the second filter frame arranged at a second axial end of the filter element.

10. The filter element of claim 8, wherein the filter element is a disc filter, wherein the first filter frame is arranged at a geometric center axis of the first filter membrane and the second filter frame is arranged at a radial outer border or edge of the first filter membrane.

11. The filter element of claim 8-10, wherein the first filter frame has, or forms, an electrical first connector and the second filter frame has, or forms, an electrical second connector.

12. A filter unit comprising a housing, or casing, a power source, and a filter element according to any of claim 1-11, wherein the housing houses, or encapsulates, the filter element and has at least one inlet arranged to receive a feed, and at least one outlet, arranged to discharge, or release, filtrate, wherein the filter is arranged to form the filtrate from the feed, and wherein the power source is arranged to apply an electric current to the filter element for reducing biofilm formation.

13. The filter unit of claim 12, wherein the power source is directly coupled, or connected, to the electrical first connector and the electrical second connector of a filter element.

14. The filter unit of claim 12-13, wherein the housing is electrically conductive and has an electrical third connector and an electrical fourth connector arranged to be coupled, or connected, to the power source.

15. The filter unit of claim 12-14, wherein the housing defines, or outlines, a cylinder having a first axial end and a second axial end, wherein the filter element couples, or connects, to the housing at the first axial end by the first filter frame and at the second axial end by the second filter frame.
